# FASCICULE DE BREVET EUROPEEN

(11) **EP 3 621 939 B1**
(45) Date de publication et mention de la délivrance du brevet: **16.07.2025**
(21) Numéro de dépôt: 18723005.7
(22) Date de dépôt: 09.05.2018
(51) Int. Cl.: C05F 17/50, C05F 17/40, C05F 9/02, C05F 17/90

(54) **PROCEDE DE TRAITEMENT BIOLOGIQUE PAR VOIE SECHE DE DECHETS ORGANIQUES**
VERFAHREN ZUR BIOLOGISCHEN TROCKENBEHANDLUNG VON ORGANISCHEM ABFALL
METHOD FOR DRY BIOLOGICAL TREATMENT OF ORGANIC WASTE

(30) Priorité: 10.05.2017 FR 1754067
(43) Date de publication de la demande: 18.03.2020
(73) Titulaire: Suez International, 92800 Puteaux (FR)
(72) Inventeur: SOMMAIN, Arnaud, 34110 Mireval (FR); MARTEL, Jean-Luc, 78290 Croissy sur Seine (FR)
(74) Mandataire: Fédit-Loriot
(86) Numéro de dépôt international: PCT/EP2018/061988
(87) Numéro de publication internationale: WO 2018/206634

(56) Documents cités:
- EP-A1- 0 520 172
- H. HARTMANN, I. ANGELIDAKI, B.K. AHRING: "Increase of anaerobic degradation of particulate organic matter in full-scale biogas plants by mechanical maceration", WATER SCIENCE AND TECHNOLOGY, vol. 41, no. 3, 1 February 2000 (2000-02-01), London, UK, pages 145 - 153, XP002777441

## Description

L'invention se rapporte à un procédé de traitement biologique par voie sèche de déchets organiques en vue de produire par fermentation du biogaz riche en méthane ou d'autres composés à valeur énergétique ou biochimique et optionnellement avec le résidu de fermentation une matière fertilisante commercialisable.

Pour optimiser le rendement de méthanisation des réacteurs biologiques industriels et assurer la valorisation agronomique de sous-produits issus d'un traitement biologique de déchets organiques en réacteurs industriel, une séparation entre les matériaux non biodégradables, qualifiés d'indésirables, et les matériaux biodégradables, doit être réalisée.

Il existe deux grandes catégories de réacteurs biologiques industriels pour un traitement biologique :
- les fermenteurs/digesteurs fonctionnant en voie sèche dans lequel les réactions biologiques seront réalisées à des teneurs en matière sèche comprises entre 12 et 40% ;
- les fermenteurs/digesteurs fonctionnant en voie humide dans lequel les réactions biologiques seront réalisées à des teneurs en matière sèche comprises entre 1 et 15%.

Les techniques de séparation des indésirables peuvent être appliquées en amont ou en aval d'un traitement biologique en réacteur industriel proprement dit. Ces techniques de séparation peuvent réclamer une dilution du déchet et une mise en suspension préalable de la fraction solide en « voie liquide » ou intervenir directement en « voie sèche ». Ainsi, deux techniques de séparation sont actuellement utilisées :
▪ Une séparation dite humide utilisée en amont des réacteurs biologiques qui fonctionnent en voie humide, et cela avec une liqueur titrant généralement moins de 15% de matière sèche à l'intérieur du réacteur biologique.
▪ Une séparation dite sèche généralement utilisée en amont des réacteurs biologiques fonctionnant en voie sèche, et cela avec une liqueur titrant généralement plus de 15% de matière sèche à l'intérieur du réacteur biologique.

L'une des techniques de séparation fonctionnant en voie sèche concerne un prétraitement sec en tube rotatif aérobie où s'effectuent une réduction granulométrique des déchets entrants par effet mécanique et un pré-compostage avec consommation d'O₂ et dégagement de CO₂, ce prétraitement pouvant avoir un temps de séjour allant de quelques heures à quelques jours et être suivi d'étapes de tris mécaniques et granulométriques adaptées. Ce prétraitement permet de produire une matière organique épurée adaptée à une méthanisation suivie d'un compostage ou à un simple compostage avec, dans les deux cas, valorisation agronomique du compost final, mais il n'est adapté qu'à des déchets organiques ayant un taux de matière sèche élevé et contenant une quantité importante de papiers cartons. De plus, lors de la courte dégradation aérobie intervenant dans le tube rotatif, une partie de la matière organique biodégradable est définitivement perdue. La fraction organique épurée issue de cette technique de séparation est méthanisable dans des réacteurs biologiques qui fonctionnent en voie sèche et peut également être mise en suspension pour être utilisée dans des réacteurs biologiques qui fonctionnent en voie humide.

Ce type de séparation n'est pas efficace sur des déchets organiques humides et collants collectés sélectivement (biodéchets) ou en mélange (ordures ménagères d'Afrique du Nord et d'Asie).

Une autre technique de séparation par voie sèche est un tri granulométrique, généralement à une maille de 40 à 80 mm. Ce tri est pratiqué à sec sur le déchet organique qui peut avoir subi une réduction granulométrique préalable, généralement un broyage, ou non, avec une étape supplémentaire de séparation balistique des inertes lourds, ou non. Cette fraction organique épurée est utilisable dans des réacteurs biologiques anaérobie qui fonctionnent en voie sèche. Toutefois la technique ne montre pas une efficacité suffisante lorsque les déchets contiennent beaucoup d'indésirables, soit 15 à 20%, ce qui généralement conduit à introduire une partie des indésirables dans les réacteurs biologiques. De plus, pour envisager une valorisation agronomique du digestat, des traitements complémentaires sont nécessaires. Ce type de séparation n'est pas efficace sur des déchets organiques humides et collants.

L'une des techniques de séparation adaptées aux déchets organiques humides et collants consiste en un prétraitement humide associé à une réduction granulométrique initiale, à une mise en suspension aqueuse ainsi qu'à une ou plusieurs séparations granulométriques, et à différentes étapes de sédimentation/décantation. La suspension finale obtenue est riche en matière organique. Cette suspension contient très peu d'indésirables et entre 6 et 12 % de matière sèche. Cette technique est adaptée à des déchets organiques humides et collants tel que les déchets de cuisine ou d'industries agroalimentaires souvent collectés en sac plastique. Cependant, en raison de la forte teneur en eau de la fraction issue de ce prétraitement, il est toutefois impossible d'associer directement cette technique avec un réacteur biologique anaérobie fonctionnant en voie sèche. L'utilisation d'un réacteur biologique anaérobie qui fonctionne en voie humide est nécessaire.

Or, l'utilisation d'un réacteur biologique anaérobie qui fonctionne en voie sèche ou en voie humide conditionne l'utilisation d'une technique de séparation des indésirables respectivement en voie sèche ou en voie humide. Dans l'art antérieur, il n'existe aucun procédé associant une séparation des indésirables réalisées en voie humide et une fermentation réalisée à l'aide d'un réacteur biologique fonctionnant en voie sèche. On peut par exemple citer le procédé décrit dans le brevet CA 2063777, qui décrit quant à lui un procédé de traitement de déchets associant la préparation d'une suspension de substances biogéniques facilement déshydratable par séparation mécanique à une digestion anaérobie, sans toutefois décrire d'étape intermédiaire de déshydration.

Au niveau des infrastructures industrielles, les volumes des réacteurs biologiques anaérobies fonctionnant en voie humide sont plus importants et cela pour une charge en substrat identique. A charge organique identique, qui correspond à la quantité de matière organique introduite dans le réacteur biologique par mètre cube de matière en réaction et par jour, le volume des réacteurs fonctionnant en voie humide est plus important à cause de la dilution importante des déchets, en moyenne deux à cinq fois plus volumineux que les fermenteurs/digesteurs voie sèche. Les réacteurs fonctionnant en voie sèche sont quant à eux plus compacts et moins énergivores du fait d'une quantité moindre d'eau à chauffer.

En comparaison avec un réacteur biologique anaérobie fonctionnant en voie sèche, un réacteur biologique anaérobie fonctionnant en voie humide produit une quantité plus importante d'eau à traiter. Avant valorisation principalement agronomique, les résidus organiques fermentés après un traitement biologique anaérobie par voie humide doivent subir une étape de séparation liquide/solide. Cette séparation est généralement réalisée mécaniquement et les volumes d'effluents produits nécessitent la mise en place d'installations d'épuration correctement dimensionnées et performantes afin de pouvoir recycler tout ou partie de l'eau en tête de procédé et rejeter les volumes non recyclés dans le réseau public ou dans le milieu naturel. Par ailleurs, la minéralisation partielle de l'azote organique pendant la phase de fermentation/digestion des déchets organiques introduit des quantités importantes d'azote ammoniacal dans ces effluents en excès ; cela nécessite un traitement, car l'azote ammoniacal est toxique pour les bactéries notamment méthanogènes et ne doit pas dépasser certaines concentrations dans les réacteurs biologiques anaérobies. Le traitement de l'azote ammoniacal in situ par stripping ou par nitrification/dénitrification est complexe et coûteux. L'utilisation d'un réacteur biologique fonctionnant en voie humide génère toujours une quantité d'effluent aqueux chargé en azote ammoniacal nécessitant un traitement spécifique avant de le recycler en amont du procédé. En revanche, le traitement biologique dans un réacteur biologique anaérobie fonctionnant en voie sèche n'a pas toujours besoin d'une étape de séparation liquide/solide et produit une quantité moins importante d'effluent. Dans certaines zones du globe, notamment en Asie, les installations de méthanisation sont amenées à traiter des déchets organiques très humides et contenant peu d'indésirables. La pratique courante implique l'utilisation d'un réacteur biologique anaérobie fonctionnant en voie humide en association avec une étape de séparation des indésirables qui peut être réalisée en aval ou en amont du traitement biologique. Ces solutions présentent plusieurs inconvénients, tels qu'une forte emprise au sol, une forte consommation en eau et en énergie, et une production d'effluent contaminé qu'il est très coûteux et complexe de traiter.

Il existe donc un besoin de développer un procédé de traitement des déchets humides et collants plus économe en énergie et en eau, et qui a besoin d'une installation plus compacte.

Hartman et al. (Water Science and Technology, 2000(41), 3, 145-153) présentent une étude sur la relation entre les méthodes de pré-traitement du fumier et le rendement en biogaz des fibres séparés du fumier. Hartman *et al.* décrivent ainsi un procédé dans lequel 1) le fumier est d'abord macéré, puis un effluent du fumier macéré est filtré pour obtenir les fibres, 2) ces dernières étant ensuite pressées pour diminuer davantage le contenu de l'eau dans les fibres, et 3) les fibres ainsi obtenues sont utilisées pour la production de biogaz, par traitement biologique anaérobie. Cependant, le fumier, qui est un mélange de litières (pailles, fourrage, etc.) et d'excréments des animaux, ne peut pas être considéré comme des déchets organiques contenant des impuretés composées de matériaux non biodégradables. En outre, le procédé de Hartman et al. ne permet pas de valoriser la partie organique épurée par traitement biologique anaérobie (production de biogaz), mais la partie insoluble (fibres).

EP 1261432 décrit un procédé de traitement de déchets solides comportant une fraction organique. Le procédé consiste à effectuer une dilution du déchet suivie de différents tamisages et application d'aimants. Il s'en suit une déshydratation, notamment par centrifugation, de la fraction organique épurée issue de ladite étape de séparation des indésirables. De ladite étape de déshydratation est issue une fraction organique épurée et déshydratée qui sera ensuite traitée dans une unité de compostage ou dans une unité de fermentation si les déchets ne proviennent pas d'un dispositif de fermentation. L'étape de déshydratation produit également une fraction aqueuse composée essentiellement par de l'eau qui sera réinjectée en amont du procédé pour diluer les déchets organiques.

Cependant, ce document ne divulgue pas la possibilité de combiner une séparation par voie humide avec un traitement biologique par voie sèche.

Par ailleurs, la déshydratation par centrifugation est adaptée seulement à une suspension ayant un taux de matière sèche inférieur à 25%.

De plus, à cause de la vitesse de rotation très élevée d'une centrifugeuse, elle est très sensible à la présence d'éléments abrasifs dans le déchet à presser et par conséquent n'est pas un système performant suffisamment robuste pour ce type de déchets.

La présente invention a pour objectif de proposer une solution technique pour pallier ce manque.

L'invention concerne un procédé de traitement biologique de déchets organiques contenant des impuretés composées de matériaux non biodégradables, ledit procédé comprenant:
- une première étape de séparation mécanique par voie humide des matériaux non biodégradables présents dans les susdits déchets organiques pour obtenir une fraction organique épurée,
- une deuxième étape de déshydratation de ladite fraction organique épurée pour obtenir une fraction organique épurée et déshydratée et un effluent,
- une troisième étape de traitement biologique anaérobie par voie sèche de la fraction organique déshydratée pour obtenir des résidus organiques.

On entend par « déchets organiques » dans le cadre de la présente demande tous déchets, triés à la source ou non, comportant une fraction solide et composée à la fois de matière organique biodégradable et de matière non biodégradable.

On entend par « matière biodégradables » tout déchet pouvant être dégradé par un traitement biologique (aérobie ou anaérobie).

On entend par « matériaux non biodégradables » tout déchet ne pouvant être dégradé rapidement par traitement biologique (aérobie ou anaérobie), c'est-à-dire ne pouvant être dégradés dans un délai inférieur à 5 ans, et de préférence dans un délai inférieur à 1 an. Des exemples de matériaux non biodégradables selon l'invention sont notamment le verre, le plastique, les textiles, cailloux et fragments de carrelage, poterie, ... et les éléments métalliques.

Dans le cadre de la présente invention, les termes « matériau nonbiodégradable », « matière non biodégradable » et « indésirables » ou « impuretés » sont interchangeables.

De préférence, lesdits déchets organiques sont des déchets organiques humides et plus ou moins collants selon leur nature (végétale, animale) et leur état de conservation lié à la saison et aux modes et fréquences de collecte mis en œuvre auprès des artisans, restaurateurs, industriels ou supermarchés ou encore des particuliers.

On entend par « séparation mécanique par voie humide » un procédé de séparation de déchets organiques consistant en une première étape optionnelle de broyage/ouverture des sacs et emballages contenant les déchets organiques suivie par une seconde étape de dilution et mise en suspension aqueuse puis par une troisième étape comportant une ou plusieurs séparations granulométriques, telles que criblage et/ou tamisage, et/ou densimétriques. La suspension aqueuse obtenue dans cette séparation mécanique par voie humide se caractérise notamment par une viscosité relativement faible, telle que la suspension peut être traitée comme un liquide faiblement visqueux. En particulier, des équipements tels que des pompes aptes à transférer des liquides suffisent pour le transport de la suspension d'un dispositif de traitement à un autre dans l'installation mettant en œuvre le procédé.

La suspension finale obtenue est épurée des indésirables et riche en matière organique. Typiquement, la suspension finale obtenue présente une teneur de 2% ou moins, et notamment de 0,3% ou moins, en masse par rapport à la masse de matière sèche pour les plastiques de granulométrie > 5mm de diamètre, et 4% ou moins, et notamment de 0,8% ou moins, en masse par rapport à la masse de matière sèche pour les déchets inertes lourds de granulométrie > 2mm de diamètre.

Dans ce qui suit, le taux de matière sèche est exprimé en %. Le taux de matière sèche correspond au rapport MS/MB de la masse de matière sèche (MS) obtenue après 24h de séchage à 105°C sur la masse brute (MB) qui correspond à la masse de matière brute avant séchage a 105°C, et exprimé en %.

On entend par « déshydratation » un procédé mécanique permettant d'évacuer une partie de la phase liquide contenue dans la suspension et d'obtenir une fraction organique épurée pâteuse à solide et dite déshydratée. La fraction organique déshydratée est ainsi relativement visqueuse, c'est-à-dire que qu'elle ne peut être considérée comme un liquide. Autrement dit, des équipements tels que des pompes aptes à transférer des liquides ne suffisent pas pour le transport de la suspension d'un dispositif de traitement à un autre : des équipements spécifiques, aptes à transférer des produits visqueux, sont nécessaires.

Typiquement, l'étape de déshydratation permet d'augmenter significativement le taux de matière sèche de la fraction organique épurée : la fraction organique épurée déshydratée (FOED) comprend en général au moins 10%, en général au moins 15% et jusqu'à au moins 20 à 25% de matière sèche (MS) de plus que la fraction organique épurée avant déshydratation (i.e. à l'issue de l'étape 1) et avant l'étape 2), FOE) : MS(FOED) = MS(FOE) + 10% à 25%. L'augmentation de la matière sèche varie en fonction de la nature de la fraction organique épurée initiale (i.e. obtenue à l'issue de l'étape 1), de sa teneur en matière sèche et du type de dispositif utilisé pour mettre en œuvre cette étape. L'homme du métier saura en particulier adapter le dispositif utilisé pour obtenir l'augmentation de la teneur en matière sèche souhaitée.

On entend par « traitement biologique anaérobie par voie sèche » un traitement utilisant fermenteurs/digesteurs anaérobies fonctionnant en voie sèche, autrement dit sans ajout d'eau et dilution importants, dans lequel les réactions biologiques anaérobies sont réalisées à des teneurs en matière sèche comprises entre 10 et 50%, notamment entre 12 et 40%.

Dans un mode de réalisation, les déchets organiques contenant des matériaux non biodégradables sont des déchets humides ayant un taux de matière sèche inférieur à 50%.

Dans un autre mode de réalisation, les déchets organiques contenant des matériaux non biodégradables sont des déchets contenant moins de 20% de matériaux non biodégradables (i.e. entre 0 et 20% en masse de matière sèche d'indésirables par rapport à la masse de matière sèche totale des déchets bruts). Typiquement, les déchets organiques contenant des matériaux non biodégradables sont des déchets contenant entre 5% et 20% en masse de matière sèche de matériaux non biodégradables par rapport à la masse de matière sèche totale des déchets bruts.

Les déchets organiques peuvent être en particulier issus de collectes sélectives.

Dans un mode de réalisation plus particulier, les déchets organiques contenant des matériaux non biodégradables sont des déchets issus d'une collecte sélective contenant au maximum 20% de matériaux non biodégradables (i.e. entre 0 et 20% en masse de matière sèche d'indésirables, et typiquement entre 5% et 20% en masse de matière sèche de matériaux non biodégradables, ces pourcentages étant exprimés par rapport à la masse de matière sèche totale des déchets bruts) et avec un taux de matière sèche inférieur ou égal à 30%.

Conformément à la présente invention, la séparation mécanique par voie humide est mise en œuvre par un apport variable d'eau de dilution du déchet brut, eau généralement recyclée et pré-traitée et par au moins un moyen choisi parmi le broyage, le tri granulométrique, la décantation, le dessablage et la flottation.

Cette étape permet d'extraire les indésirables des déchets organiques pour obtenir une fraction organique épurée. Les moyens de séparation mécanique peuvent être mis en œuvre seuls ou en combinaison.

On peut citer à titre d'exemple de moyen de broyage, un broyeur ou un pulpeur qui assurent un défibrage des déchets.

Comme moyen de tri granulométrique, on peut citer un tamis cylindrique qui permet de retenir par exemple les plastiques ou un piège à sable qui peut être utilisé dans cette étape pour séparer les matériaux non-biodégradables lourds, tels que le sable, le verre ou les métaux.

Le taux de matière sèche du déchet à l'issue de l'étape de la séparation mécanique par voie humide est d'environ 6% à 20%, et de préférence d'environ 8% à 15%.

La mise en œuvre d'une étape de déshydratation sur la fraction organique épurée obtenue à la fin de l'étape de séparation mécanique par voie humide permet de diminuer ou d'éliminer l'effluent de la fraction organique épurée et d'obtenir une fraction organique épurée et déshydratée qui peut être traitée dans un réacteur biologique fonctionnant en voie sèche.

Le taux de matière sèche du déchet à l'issue de l'étape de déshydratation de ladite fraction organique épurée est d'environ 25% à 50%, de préférence d'environ 25% à 35%, de manière encore préférée d'environ 25% à 30%.

Conformément à la présente invention, la troisième étape du procédé est mise en œuvre dans un réacteur biologique anaérobie fonctionnant en voie sèche, notamment un fermenteur ou digesteur anaérobie fonctionnant en voie sèche.

Le taux de matière sèche du déchet à l'issue de l'étape du traitement biologique anaérobie par voie sèche est d'environ 12% à 40%.

Des résidus organiques à l'issue du réacteur biologique peuvent subir une deuxième déshydratation pour obtenir des résidus organiques déshydratés.

Dans un mode de réalisation avantageux de l'invention, la déshydratation de la fraction organique épurée est mise en œuvre par pressage mécanique, qui est adapté à des fluides hétérogènes, fibreux et à fortes teneurs en matière sèche.

Avantageusement, le pressage mécanique est réalisé à l'aide d'une vis sans fin opposant une force contre un filtre, ou encore un piston exerçant une force de compression contre un filtre, la fraction organique épurée étant pressée contre le filtre, ou éventuellement entre plusieurs filtres. On pourra ainsi utiliser un filtre presse, notamment un filtre presse à piston, ou bien un filtre presse à plateau comme par exemple un équipement de la société FAURE EQUIPEMENT. On pourra également mettre en œuvre le pressage mécanique à l'aide d'une presse à vis sans fin telle que par exemple la presse STRAINPRESS commercialisée par la société HUBER.

Plus avantageusement, le pressage mécanique est mis en œuvre par une presse à piston, telle que la presse à piston de Bücher. Ce type de presse permet d'extraire une quantité d'eau importante d'une fraction organique épurée tout en conservant la majeure partie des éléments solides biodégradables en vue de les traiter dans les réacteurs biologiques industriels fonctionnant en voie sèche.

Par rapport à la déshydratation par centrifugation, une presse à piston est particulièrement avantageuse, car une presse à piston peut travailler sur une suspension ayant un taux de matière sèche jusqu'à 50% (notamment entre 2% et 35%), alors que la centrifugation ne peut en général travailler que sur une suspension ayant un taux de matière sèche inférieur à 25% (notamment entre 2% et 15%).

Par ailleurs, la presse à piston (notamment un filtre-presse à piston) est plus robuste et moins sensible à la présence d'éléments abrasifs dans le déchet à presser par rapport à une centrifugeuse.

Selon un mode de réalisation, le procédé de la présente invention comprend en outre une étape supplémentaire après la deuxième étape (la déshydratation de la fraction organique épurée) et avant la troisième étape (le traitement biologique), ladite étape supplémentaire consistant en une étape de recirculation d'une partie de l'effluent obtenu à l'issue de la deuxième étape vers la première étape de séparation mécanique par voie humide.

La proportion de l'effluent à recycler dans l'étape de recirculation est variable selon la teneur en matière sèche initiale du déchet et selon le procédé global appliqué. L'homme du métier saura déterminer ces proportions à la lumière des connaissances générales.

L'effluent issu de la deuxième étape, notamment du pressage, peut être plus facilement recyclé en tête du procédé.

Grâce à cette recirculation, le procédé de l'invention consomme très peu d'eau.

Par ailleurs, l'azote ammoniacal qui est produit principalement durant l'étape de traitement biologique en fermenteurs/digesteurs n'est que très peu présent dans l'effluent obtenu après l'étape de déshydratation de la fraction organique épurée qui est non ou peu fermentée.

L'effluent obtenu après l'étape de déshydratation peut subir un traitement biologique et/ou un traitement physico-chimique avant d'être recyclé vers la première étape de séparation mécanique par voie humide.

Ledit traitement biologique peut être une nitrification/dénitrification.

Ledit traitement physico-chimique peut être un stripping et/ou une ultrafiltration ainsi qu'une osmose inverse.

Ces traitements permettent d'éliminer davantage de matériaux solides en suspension dans l'effluent. Les traitements physico-chimiques ou biologiques produisent des boues qui peuvent être recyclées vers l'étape de déshydratation.

Le traitement physico-chimique et/ou le traitement biologique peut être appliqué seulement sur une partie de l'effluent obtenu dans la deuxième étape du procédé et nécessite des ouvrages de moindre dimensionnement.

Dans un mode de réalisation avantageux, le procédé de l'invention comprend une étape supplémentaire de traitement physico-chimique et/ou un traitement biologique d'au moins une partie de l'effluent avant la recirculation. Cette étape supplémentaire est mise en place après l'étape de déshydratation de la fraction organique épurée et vise à traiter l'effluent issu d'un dispositif de déshydratation. A l'issue du traitement physico-chimique et/ou traitement biologique, l'effluent est recyclé vers la première étape du procédé.

Dans un autre mode de réalisation avantageux, l'effluent issu de la deuxième étape (l'étape de déshydratation) subit un traitement physico-chimique et/ou un traitement biologique après plusieurs boucles de recyclage.

Dans le cadre de l'invention, le procédé peut comprendre en outre une étape de pasteurisation de la fraction organique épurée obtenue à l'issue de la première étape (l'étape de séparation mécanique) et/ou une étape de pasteurisation de la fraction organique épurée et déshydratée obtenue à l'issue de la deuxième étape (l'étape de déshydratation).

La pasteurisation permet d'hygiéniser les fractions organiques épurées en vue de se conformer à la règlementation sur les sous-produits animaux dans la mesure où les fractions organiques épurées à traiter sont en partie d'origine animale et assimilables à des sous-produits animaux de catégorie 2 ou 3 tels que décrits dans le règlement européen.

Cette hygiénisation est réalisée à 70°C et ce pendant au moins une heure et permet également de pré-chauffer la fraction organique épurée avant de la méthaniser.

Dans un autre mode de réalisation, le procédé de l'invention comprend en outre, après la troisième étape, une étape de compostage des résidus organiques.

Selon un mode de réalisation préféré, le ratio carbone/azote de la fraction organique déshydratée est contrôlé de manière à optimiser la troisième étape de traitement biologique anaérobie.

Le ratio carbone sur azote (C/N) est un paramètre communément utilisé par l'homme du métier, qui sait le mesurer par des méthodes conventionnelles. Il est typiquement mesuré à l'aide d'un analyseur CHN ou d'un spectromètre de masse isotopique à flux continu (CF-IRMS).

De préférence, le taux carbone/azote (C/N) est compris entre 20 et 35%, de manière encore préférée entre 24 et 28%.

En effet, notamment dans le cas de recirculation d'effluents tels que l'effluent de déshydratation, la fraction organique déshydratée peut présenter une teneur en azote trop élevé par rapport à la teneur en carbone, ce qui peut avoir un impact négatif sur l'étape de traitement biologique anaérobie.

Ainsi, le procédé de l'invention pourra comprendre une étape optionnelle d'ajustement du ratio carbone/azote de la fraction organique déshydratée, typiquement par augmentation du taux de carbone par ajout de matières organiques riches en carbone, par exemple par ajout de déchets à haute teneur en carbone.

Par « déchets à haute teneur en carbone », on entend au sens de la présente invention des déchets présentant un taux C/N supérieur à 20%, de préférence compris entre 20% et 100%. Des exemples de déchets à haute teneur en carbone typiquement utilisés dans l'invention sont des déchets végétaux tels que des copeaux de bois ou des déchets verts ligneux, mais également du papier et/ou du carton.

Par ailleurs, lorsque le taux carbone/azote est ajusté par ajout de déchets à forte teneur en carbone, l'homme du métier sait déterminer la quantité de déchet à ajouter pour obtenir la plage de ratio carbone azote optimale pour la troisième étape de traitement biologique anaérobie.

Selon un autre mode de réalisation de l'invention, au moins une partie de l'effluent issu du traitement biologique anaérobie - qui contient des microorganismes anaérobie - est recirculée vers la première étape de séparation mécanique par voie humide ou vers la deuxième étape de déshydratation, ou est réutilisée dans la troisième étape de traitement biologique anaérobie.

Une telle recirculation a pour objectif de maintenir la population bactérienne dans la troisième étape de traitement biologique anaérobie, de manière à maintenir le rendement (ou niveau de performance) de ladite étape.

**La** proportion de l'effluent issu du traitement biologique anaérobie à recycler dans l'étape de recirculation est variable selon la teneur en matière sèche initiale du déchet et selon le procédé global appliqué. L'homme du métier saura déterminer ces proportions à la lumière des connaissances générales.

L'effluent issu du traitement biologique anaérobie peut être plus facilement recyclé en tête du procédé. Grâce à cette recirculation, le procédé de l'invention consomme très peu d'eau.

Il est également décrit une installation pour la mise en œuvre du procédé de l'invention tel que décrit ci-dessus.

Ladite installation comprend :
- un dispositif ou une combinaison de dispositifs de séparation mécanique par voie humide de matériaux non biodégradables pour obtenir une fraction organique épurée;
- un dispositif de déshydratation pour déshydrater la fraction organique épurée pour obtenir une fraction organique épurée et déshydratée ;
- un dispositif de traitement biologique anaérobie par voie sèche de la fraction organique épurée et déshydratée,
ledit dispositif de déshydratation étant installé en aval d'un dispositif ou d'une combinaison de dispositifs de séparation mécanique et en amont d'un dispositif de traitement biologique par voie sèche.

Dans un mode de réalisation, ledit dispositif de séparation mécanique est choisi parmi un broyeur, un agitateur, un tamis cylindrique, un décanteur, un flottateur, un dessableur. Ces dispositifs peuvent être utilisés seul ou en combinaison.

Dans un mode de réalisation avantageux, ledit dispositif de déshydratation est une presse à piston, telle que la presse à piston de Bücher. Alternativement, il peut s'agir d'un filtre presse, notamment un filtre presse à piston, ou bien un filtre presse à plateau comme par exemple un équipement de la société FAURE EQUIPEMENT. Il peut également s'agir d'une presse à vis sans fin telle que par exemple la presse STRAINPRESS commercialisée par la société HUBER.

Selon un mode de réalisation avantageux, l'installation comprend une boucle de recirculation permettant de faire recirculer au moins une partie de l'effluent contenant des microorganismes anaérobie obtenu à la sortie du dispositif de traitement biologique anaérobie vers l'entrée du dispositif de traitement biologique anaérobie, ou à l'entrée du dispositif ou de la combinaison de dispositifs de séparation mécanique par voie humide.

Dans un mode de réalisation avantageux, ledit dispositif de traitement biologique anaérobie est un fermenteur ou digesteur anaérobie fonctionnant en voie sèche.

D'autres avantages et particularités de l'invention ressortiront à la lecture de la description qui suit, en référence à la figure annexée, qui illustrent :

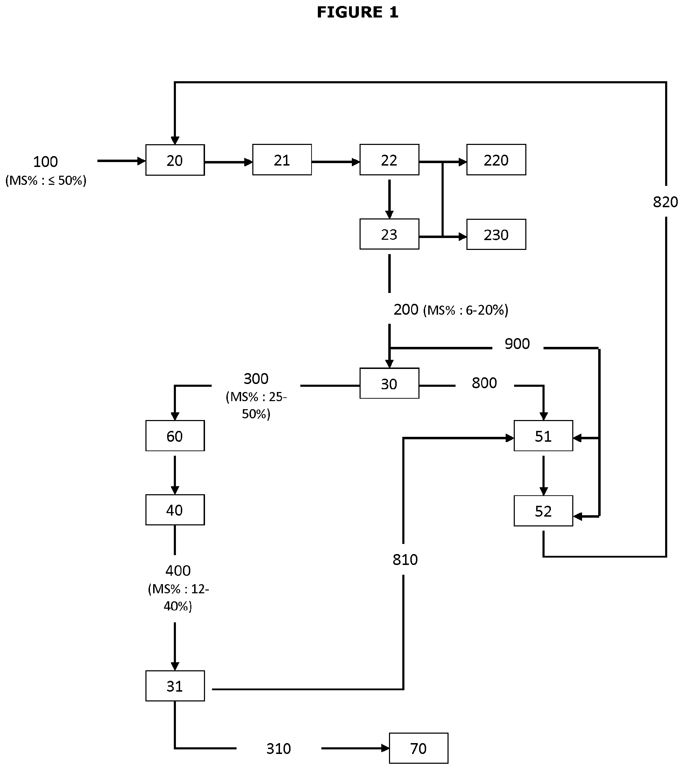

La figure 1 illustre un mode de réalisation particulier du procédé de l'invention. Selon ce mode de réalisation, les déchets organiques 100 subissent d'abord une séparation mécanique mise en œuvre par plusieurs dispositifs de séparation mécanique, à savoir un broyeur 20, un agitateur 21, un tamis cylindrique 22 et un piège à sable et flottants 23.

La fraction organique épurée 200 à l'issue de cette séparation mécanique est introduite dans un premier dispositif de déshydratation 30. A l'issue de ce dispositif 30, la fraction organique épurée et déshydratée 300 est pasteurisée dans un dispositif 60 et ensuite traitée dans un réacteur biologique anaérobie fonctionnant en voie sèche 40. Des résidus organiques 400 à l'issue de ce traitement sont déshydratés dans un deuxième dispositif de déshydratation 31. Des résidus organiques déshydratés 310 à l'issue de cette étape sont introduits dans un dispositif de compostage 70.

L'effluent à l'issue de la première déshydratation 800 et l'effluent à l'issue de la deuxième déshydratation 810 subissent successivement un traitement physico-chimique 51 et un traitement biologique 52. Des boues 900 obtenues dans ces traitements sont introduites dans le premier dispositif de déshydratation 30. L'effluent 820 à l'issue de ces traitements est recyclé vers les dispositifs de séparation mécanique, à savoir le broyeur 20, l'agitateur 21, le tamis cylindrique 22.

## Revendications

1. Procédé de traitement biologique de déchets organiques contenant des impuretés composées de matériaux non biodégradables, comprenant:
• une première étape de séparation mécanique par voie humide des matériaux non biodégradables présents dans les susdits déchets organiques pour obtenir une fraction organique épurée présentant un taux de matière sèche de 6% à 20%,
• une deuxième étape de déshydratation de ladite fraction organique épurée pour obtenir une fraction organique épurée et déshydratée présentant un taux de matière sèche de 25% à 50% et un effluent,
• une troisième étape de traitement biologique anaérobie par voie sèche de la fraction organique déshydratée pour obtenir des résidus organiques.

2. Procédé selon la revendication 1, dans lequel les déchets organiques contenant des matériaux non biodégradables sont des déchets humides ayant un taux de matière sèche inférieur à 50%.

3. Procédé selon la revendication 1 ou 2, dans lequel les déchets organiques contenant des matériaux non biodégradables sont des déchets contenant moins de 20% de matériaux non biodégradables.

4. Procédé selon l'une quelconque des revendications 1 à 3 dans lequel la déshydratation de la fraction organique épurée est mise en œuvre par pressage mécanique.

5. Procédé selon la revendication 4, dans lequel le pressage mécanique est mis en œuvre par une presse à piston, une presse à vis sans fin, un filtre presse à piston, ou un filtre presse à plateau.

6. Procédé selon l'une quelconque des revendications 1 à 5, comprenant en outre une étape supplémentaire après la deuxième étape et avant la troisième étape, ladite étape supplémentaire consistant en une étape de recirculation d'une partie de l'effluent obtenu à l'issue de la deuxième étape vers la première étape de séparation mécanique par voie humide.

7. Procédé selon la revendication 6, comprenant en outre une étape supplémentaire de traitement physico-chimique et/ou un traitement biologique d'au moins une partie de l'effluent avant la recirculation.

8. Procédé selon l'une quelconque des revendications 1 à 7 comprenant en outre une étape de pasteurisation de la fraction organique épurée obtenue à l'issue de la première étape et/ou une étape de pasteurisation de la fraction organique épurée et déshydratée obtenue à l'issue de la deuxième étape.

9. Procédé selon l'une quelconque des revendications 1 à 8, dans lequel la troisième étape est mise en œuvre dans un fermenteur ou digesteur en voie sèche.

10. Procédé selon l'une quelconque des revendications 1 à 9, dans lequel la séparation mécanique en voie humide est mise en œuvre par au moins un moyen choisi parmi le broyage, le tri granulométrique, la décantation, le dessablage et la flottation.

11. Procédé selon l'une quelconque des revendications 1 à 10, **caractérisé en ce qu'**il comprend une étape optionnelle d'ajustement du ratio carbone/azote de la fraction organique déshydratée obtenue à l'issue de la deuxième étape, typiquement par augmentation du taux de carbone par ajout de matières organiques riches en carbone.

12. Procédé selon l'une quelconque des revendications 1 à 11, **caractérisée en ce que** au moins une partie de l'effluent issu du traitement biologique anaérobie - qui contient des microorganismes anaérobie - est recirculée vers la première étape de séparation mécanique par voie humide ou vers la deuxième étape de déshydratation, ou est réutilisée dans la troisième étape de traitement biologique anaérobie.

13. Procédé selon l'une quelconque des revendications 1 à 12, comprenant en outre, après la troisième étape, une étape de compostage des résidus organiques.

## Patentansprüche

1. Verfahren zur biologischen Behandlung organischer Abfälle, die aus nicht biologisch abbaubaren Materialien zusammengesetzte Verunreinigungen enthalten, umfassend:
• einen ersten Schritt zum mechanischen Nassabscheiden der nicht biologisch abbaubaren Materialien, die in den zuvor genannten organischen Abfällen vorhanden sind, um eine gereinigte organische Fraktion zu erhalten, die einen Trockensubstanzgehalt von 6% bis 20% aufweist,
• einen zweiten Schritt zum Dehydrieren der gereinigten organischen Fraktion, um eine gereinigte und dehydrierte organische Fraktion zu erhalten, die einen Trockensubstanzgehalt von 25% bis 50% und ein Abwasser aufweist,
• einen dritten Schritt zur anaeroben biologischen Trockenaufbereitung der dehydrierten organischen Fraktion, um organische Reststoffe zu erhalten.

2. Verfahren nach Anspruch 1, wobei die nicht biologisch abbaubare Materialien enthaltenden organischen Abfälle feuchte Abfälle sind, die einen Trockensubstanzgehalt von weniger als 50% aufweisen.

3. Verfahren nach Anspruch 1 oder 2, wobei die nicht biologisch abbaubare Materialien enthaltenden organischen Abfälle solche Abfälle sind, die weniger als 20% an nicht biologisch abbaubaren Materialien enthalten.

4. Verfahren nach einem der Ansprüche 1 bis 3, wobei das Dehydrieren der gereinigten organischen Fraktion durch mechanisches Pressen umgesetzt wird.

5. Verfahren nach Anspruch 4, wobei das mechanische Pressen durch eine Kolbenpresse, eine Schneckenpresse, eine Kolbenfilterpresse, oder eine Plattenfilterpresse umgesetzt wird.

6. Verfahren nach einem der Ansprüche 1 bis 5, das weiter einen zusätzlichen Schritt nach dem zweiten Schritt und vor dem dritten Schritt umfasst, wobei der zusätzliche Schritt aus einem Rückführungsschritt eines Teils des am Ende des zweiten Schrittes erhaltenen Abwasser zum ersten Schritt zum mechanischen Nassabscheiden besteht.

7. Verfahren nach Anspruch 6, das weiter einen zusätzlichen Schritt zur physikalisch-chemischen Aufbereitung und/oder einer biologischen Aufbereitung mindestens eines Teils des Abwassers vor dem Rückführen umfasst.

8. Verfahren nach einem der Ansprüche 1 bis 7, das weiter einen Schritt zum Pasteurisieren der gereinigten organischen Fraktion umfasst, die am Ende des ersten Schrittes erhalten wird, und/oder einen Schritt zum Pasteurisieren der gereinigten und dehydrierten organischen Fraktion umfasst, die am Ende des zweiten Schrittes erhalten wird.

9. Verfahren nach einem der Ansprüche 1 bis 8, wobei der dritte Schritt in einem Gärbehälter oder Trockenfaulbehälter umgesetzt wird.

10. Verfahren nach einem der Ansprüche 1 bis 9, wobei das mechanische Nassabscheiden durch mindestens ein Mittel umgesetzt wird, das aus Zerkleinern, granulometrischem Sortieren, Dekantieren, Sandentfernung und Flotation ausgewählt ist.

11. Verfahren nach einem der Ansprüche 1 bis 10, **dadurch gekennzeichnet, dass** es einen optionalen Schritt zum Anpassen des Verhältnisses von Kohlenstoff/Stickstoff der dehydrierten organischen Fraktion umfasst, die am Ende des zweiten Schrittes erhalten wird, typischerweise durch Erhöhen des Kohlenstoffanteils durch Beigabe kohlenstoffreicher organischer Materialien.

12. Verfahren nach einem der Ansprüche 1 bis 11, **dadurch gekennzeichnet, dass** mindestens ein Teil des Abwassers am Ende der anaeroben biologischen Aufbereitung - die anaerobe Mikroorganismen enthält - zum ersten Schritt zum mechanischen Nassabscheiden oder zum zweiten Schritt zum Dehydrieren rückgeführt wird, oder im dritten Schritt zur anaeroben biologischen Aufbereitung wiederverwendet wird.

13. Verfahren nach einem der Ansprüche 1 bis 12, das weiter nach dem dritten Schritt einen Kompostierungsschritt der organischen Reststoffe umfasst.

## Claims

1. A method for biological treatment of organic waste containing impurities composed of non-biodegradable materials, comprising:
• a first step of wet mechanical separation of the non-biodegradable materials present in the aforesaid organic waste such as to obtain a purified organic fraction having a dry matter content of 6% to 20%,
• a second step of dewatering said purified organic fraction such as to obtain a purified, dewatered organic fraction having a dry matter content of 25% to 50% and an effluent,
• a third step of dry anaerobic biological treatment of the dewatered organic fraction such as to obtain organic residues.

2. The method as claimed in claim 1, wherein the organic waste containing non-biodegradable materials is wet waste having a dry matter content of less than 50%.

3. The method as claimed in claim 1 or 2, wherein the organic waste containing non-biodegradable materials is waste containing less than 20% non-biodegradable materials.

4. The method as claimed in any one of claims 1 to 3, wherein the purified organic fraction is dewatered by means of mechanical pressing.

5. The method as claimed in claim 4, wherein mechanical pressing is implemented by a piston press, a worm-gear press, a piston filter press or a plate filter press.

6. The method as claimed in any one of claims 1 to 5, further comprising a supplementary step after the second step and before the third step, said supplementary step consisting in a step of recirculating a portion of the effluent obtained on completion of the second step toward the first wet mechanical separation step.

7. The method as claimed in claim 6, further comprising a supplementary step of physico-chemical treatment and/or a biological treatment of at least a portion of the effluent prior to recirculation.

8. The method as claimed in any one of claims 1 to 7, further comprising a step of pasteurizing the purified organic fraction obtained on completion of the first step and/or a step of pasteurizing the purified, dewatered organic fraction obtained on completion of the second step.

9. The method as claimed in any one of claims 1 to 8, wherein the third step is implemented in a dry digester or fermenter.

10. The method as claimed in any one of claims 1 to 9, wherein wet mechanical separation is implemented via at least one means chosen from grinding, sorting by particle size, settling, desilting and flotation.

11. The method as claimed in any one of claims 1 to 10, **characterized in that** it comprises an optional step of adjustment of the carbon/nitrogen ratio of the dewatered organic fraction obtained on completion of the second step, typically via increasing the carbon content by adding carbon-rich organic materials.

12. The method as claimed in any one of claims 1 to 11, **characterized in that** at least a portion of the effluent originating from the anaerobic biological treatment - containing anaerobic microorganisms - is recirculated to the first, wet mechanical separation step or to the second, dewatering step, or is reused in the third step of anaerobic biological treatment.

13. The method as claimed in any one of claims 1 to 12, further comprising, after the third step, a step of composting the organic residues.
